# EUROPEAN PATENT SPECIFICATION

(11) **EP 3 114 878 B1**
(45) Date of publication and mention of the grant of the patent: **03.07.2019**
(21) Application number: 15712459.5
(22) Date of filing: 04.03.2015
(51) Int. Cl.: H04W 36/18, H04W 84/12, H04W 36/14

(54) **HANDOVER METHOD BASED ON SEAMLESS MOBILITY CONDITIONS**
ÜBERGABEVERFAHREN BASIEREND AUF BEDINGUNGEN FÜR NAHTLOSE MOBILITÄT
PROCÉDÉ DE TRANSFERT SUR LA BASE DE CONDITIONS DE MOBILITÉ TRANSPARENTE

(30) Priority: 04.03.2014 US 201461947449 P; 06.05.2014 US 201414270600
(43) Date of publication of application: 11.01.2017
(73) Proprietor: Google Technology Holdings LLC, Mountain View, CA 94043 (US)
(72) Inventor: SALKINTZIS, Apostolis, K., GR-15354 Athens (GR)
(74) Representative: Boult Wade Tennant LLP
(86) International application number: PCT/US2015/018751
(87) International publication number: WO 2015/134624

(56) References cited:
- "3rd Generation Partnership Project; Technical Specification Group Services and System Aspects; Architecture enhancements for non-3GPP accesses (Release 12)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.3.0, 13 December 2013 (2013-12-13), pages 1-288, XP050728779, [retrieved on 2013-12-13]
- "Small Cell Forum Ltd Integrated Femto-WiFi (IFW) Networks", , 28 February 2012 (2012-02-28), XP055145624, Retrieved from the Internet: URL:http://www.smallcellforum.org/smallcel lforum_resources/pdfsend01.php?file=Integr ated-Femto-WiFi-Networks-White-Paper_sm.pd f [retrieved on 2014-10-10]
- JOHN L TOMICI ET AL: "Multi-RAT traffic offloading solutions for the bandwidth crunch problem", SYSTEMS, APPLICATIONS AND TECHNOLOGY CONFERENCE (LISAT), 2011 IEEE LONG ISLAND, IEEE, 6 May 2011 (2011-05-06), pages 1-6, XP031880722, DOI: 10.1109/LISAT.2011.5784243 ISBN: 978-1-4244-9878-9

## Description

### TECHNICAL FIELD

The present disclosure is related generally to wireless communications and, more specifically, to handover methods for offloading traffic from a cellular network to a wireless local area network ("WLAN").

### BACKGROUND

The performance of Internet-based applications on mobile computing devices is often impacted by the capabilities of the underlying network technologies. To provide access to the Internet for the applications on mobile devices, cellular wireless communication systems are widely deployed. Such systems may be multiple-access systems able to support communication with multiple users by sharing system resources such as bandwidth and transmission power. Commonly used multiple-access systems include, but are not limited to, Code-Division Multiple Access systems, Time-Division Multiple Access systems, Frequency-Division Multiple Access, 3rd Generation Partnership Project Long Term Evolution systems, Long Term Evolution Advanced systems, Orthogonal Frequency-Division Multiple Access systems, and the like.

Additionally or alternatively, a mobile computing device may connect to data communications networks via a WLAN. Exemplary WLAN networks include, but are not limited to, WiFi networks, home WLANs, WLAN hotspots, public WLANs, private WLANs, and the like.

With an increasing number of mobile computing devices featuring WLAN-connectivity capability and with access to WLAN networks becoming more widely available, offloading data capabilities from a cellular network to a WLAN may be an attractive feature for both cellular network operators and users. To that end, methods for offloading data capabilities by handing over the connection from the cellular network to a WLAN, or "connection handover methods," may be used. A connection handover method may be used to establish a connection with a WLAN while disconnecting from a cellular network.

"3GPPTS 23.402 V12.3.0: 3rd Generation Partnership Project; Technical Specification Group Services and System Aspects; Architecture enhancements for non-3GPP accesses (Release 12)" is a technical specification that describes methods for providing IP connectivity using non-3GPP accesses to the Evolved 3GPP Packet Switched domain.

"Small Cell Forum Ltd Integrated Femto-WiFi (IFW) Networks", 28 February 2012 describes integrated Femto and WiFi networks with dual air-interface support for smartphones. "Multi-RAT traffic offloading solutions for the bandwidth crunch problem" by JOHN L TOMICI ET AL describes selective IP traffic offload techniques for the Core Network, and FemtoCell solutions for the Radio Access Network.

The scope of the present invention is defined in the claims.

### BRIEF DESCRIPTION OF THE SEVERAL VIEWS OF THE DRAWINGS

While the appended claims set forth the features of the present techniques with particularity, these techniques, together with their objects and advantages, may be best understood from the following detailed description taken in conjunction with the accompanying drawings of which:
Figure 1 illustrates an example access architecture for a WLAN and a cellular network interworking with non-seamless handover;
Figure 2 illustrates an example access architecture for a WLAN and a cellular network interworking with seamless handover;
Figure 3 is a generalized schematic of an example device within which embodiments of the presently disclosed principles may be implemented;
Figure 4 is a flowchart of a representative method for selecting seamless mobility or non-seamless mobility based on conditions requiring seamless handover; and
Figure 5 is a flowchart expanding on the determination of conditions requiring seamless handover of Figure 4.

### DETAILED DESCRIPTION

In providing a mobile device with data connectivity, operators desire to provide a seamless user experience in their connectivity handover solutions to keep device users satisfied with device performance. Many of the disruptions that can cause a break in data service are caused when the mobile device switches from a cellular connectivity to WLAN connectivity.

Most current mobile devices employ a non-seamless handover from a cellular access network to a WLAN access network. Non-seamless handover is characterized by a change in Internet protocol ("IP") address and, therefore, the handover cannot provide seamless transition without potential network interruption. Generally, applications executed by a mobile device identify and react to non-seamless connectivity handovers by re-establishing their network connections or traffic streams.

Although the re-established of network connection may consume battery life and cellular resources, such re-establishment may be considered acceptable behaviour when it does not detrimentally impact the user experience. For example, a user browsing a web page may not have his user experience detrimentally affected by a non-seamless handover disruption, as the web page is not streaming data to the user as a continuous data stream. Other example non-streaming applications wherein such non-seamless handover may be acceptable may include, for example, email applications, social-networking applications, instant-messaging applications, location-monitoring applications, and the like.

However, during execution of many applications, a non-seamless handover is unacceptable because the communication session may be interrupted. For example, streaming video or audio applications, voice over IP (VoIP) applications, or any real-time or recorded content streaming applications may experience data interruption during a non-seamless handover. Thusly, connectivity methods wherein the handover from cellular to WLAN is seamless ("seamless handover") may be employed to prevent such data interruption when such applications are in use. In some example mobile devices, the mobile device may be programmed to employ an application programming interface ("API") that allows applications to indicate that they require seamless handover. Moreover, while executing a specific application may require seamless handover, other conditions may also mandate seamless handover, such as display activation, data-traffic analysis, access-network discovery and search function ("ANDSF") rules, and the like.

In contrast to a non-seamless handover, a seamless handover does not impact the ongoing data flow, and applications do not need to identify and react to the handover, as they do in non-seamless handover situations. One characteristic that allows a seamless handover to provide data continuity is that is preserves the same IP address across both the cellular network and the handed-over to WLAN.

In an embodiment, a seamless handover method may include the use of "trusted" WLAN networks. A trusted WLAN is a WLAN that supports advanced security measures (such as Universal Subscriber Identity Module-based authentication) and is capable of providing a connection to the cellular network. Therefore, when a mobile device performs a handover from the cellular network to a trusted WLAN, the IP address can be maintained because both networks have access to a common packet data network gateway ("P-GW"). This enables the handover to be seamless.

Many cellular network operators have deployed trusted WLAN networks and have integrated them within their core cellular network via network reference points or server gateways. Cellular operators may deploy trusted WLAN networks to offer access to operator-hosted IP services over such WLAN networks. Further, extended use of trusted WLANs may enable the cellular network operators to offer IP Multimedia System voice over services via WLAN.

As described above, a mobile device may have the option of either non-seamless handover or seamless handover from a cellular network to a trusted WLAN based on present conditions associated with the mobile device. Therefore, a method for providing connectivity handover for a mobile device from a cellular network to a local area network may determine if a condition requiring seamless handover is present. If such a condition is present, then the mobile device may employ seamless handover.

To that end, a method for providing connectivity handover for a mobile device is disclosed in an embodiment of the present disclosure. The connectivity handover is a network handover from a cellular network to a handover WLAN. The method includes establishing connectivity to a public data network ("PDN") via the cellular network, determining the availability of one or more WLANs, and determining if a condition requiring seamless handover is present, the condition requiring seamless handover being associated with the mobile device. If a condition requiring seamless handover is present, then the method determines whether at least one of the one or more WLANs is a trusted WLAN and provides seamless handover to the PDN via the cellular network. A WLAN is trusted and provides seamless handover to the PDN via the cellular network if the WLAN supports an S2a interface with the cellular network. A WLAN may support an S2a interface with multiple cellular network carriers.

If at least one of the discovered WLANs is trusted and provides seamless handover to the PDN, then the mobile device selects one of such trusted WLANs and, during an authentication process with the WLAN, requests connectivity to the PDN via the cellular network. However, if no conditions requiring seamless handover are present or if the user device does not discover at least one WLAN that is trusted and provides seamless handover, then the mobile device selects any WLAN, and, during authentication with the WLAN, the mobile device does not request connectivity to the PDN via the cellular network.

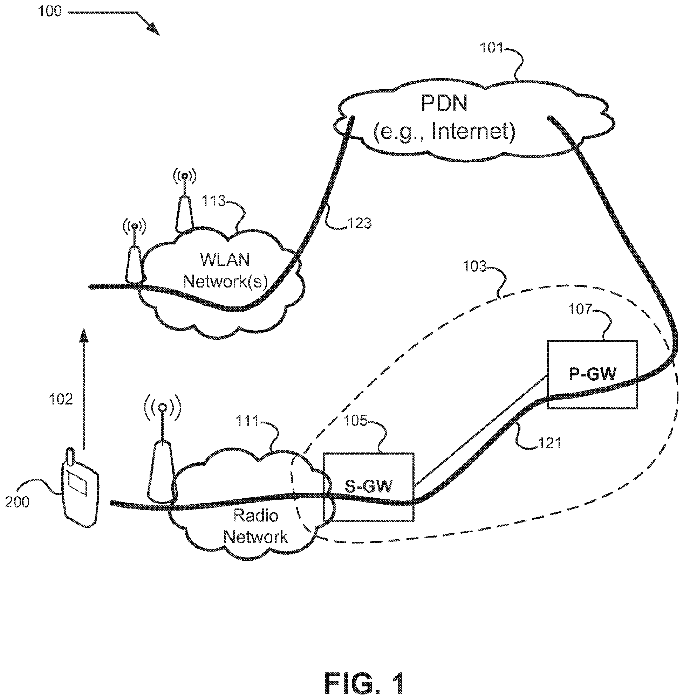

Turning now to the drawings and with specific reference to Figure 1, architecture 100 for the interworking of a WLAN and a cellular network with non-seamless mobility is shown. A mobile device 200 is first connected to the Internet 101 via a cellular connection 121. The cellular connection 121 transmits and receives data to or from the mobile device 200, routing said data through a cellular network 111 in operative connectivity with a PDN 103. The PDN 103 may send or receive packet data using a server gateway 105 associated with the radio network and a P-GW 107. Thusly, the cellular connection provides connectivity to Internet data services via the cellular connection 121.

In the architecture 100, the mobile device 200 may perform a non-seamless connectivity handover 102 to change device connectivity from the cellular connection 121 to a WLAN connection 123. As mentioned above, a non-seamless connectivity handover 102 is characterized by a change in IP address and, therefore, the handover 102 cannot provide a seamless transition from the cellular connection 121 to the WLAN connection 123 without potential data interruption. The WLAN connection 123 provides the mobile device 200 with data services by connecting to the Internet 101 via WLAN networks 113. The WLAN networks 113 may include, but are not limited to, one or more WiFi networks, home WLANs, WLAN hotspots, public WLANs, private WLANs, and the like.

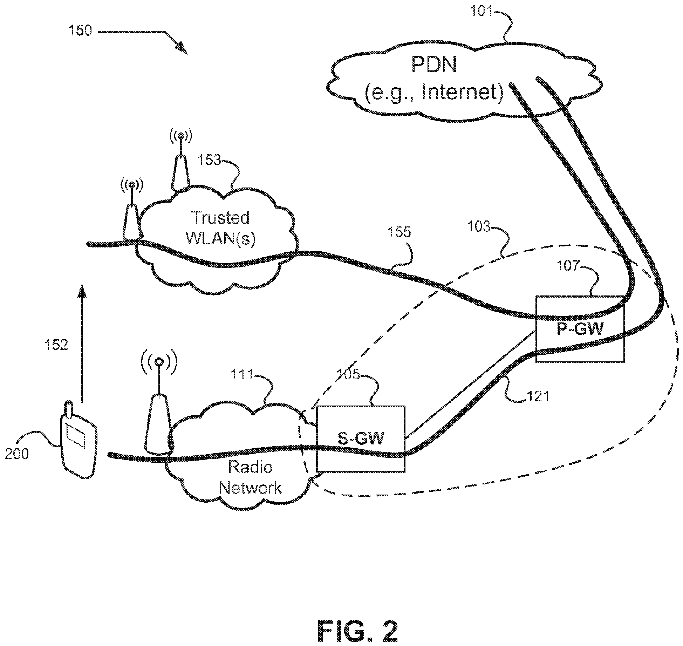

Seamless handover methods may be employed using the architecture 150 shown in Figure 2, the architecture 150 configured for the interworking of a WLAN and a cellular network. In the embodiment shown, the mobile device 200 is initially connected to the Internet 101 via the cellular connection 121, in a manner analogous to the cellular connection 121 of Figure 1. However, the architecture 150 is configured for seamless connectivity handover 152, wherein the network connection is handed over from the cellular connection 121 to a trusted WLAN connection 155. The seamless handover 152 may involve the use of trusted WLAN networks 153. The trusted WLAN network 153 is a WLAN with the capability to additionally provide a connection to the PDN 103. Because both the trusted WLAN connection 155 and the cellular connection 121 route via the PDN 103, if the mobile device 200 performs a seamless handover 152 from the cellular connection 121 to the trusted WLAN connection 155, then an IP address associated with the mobile device 200 is maintained, and, thusly, seamless handover 152 is achieved. The cellular network 111 and the trusted WLAN 153 may support S2a interconnectivity for seamless handover.

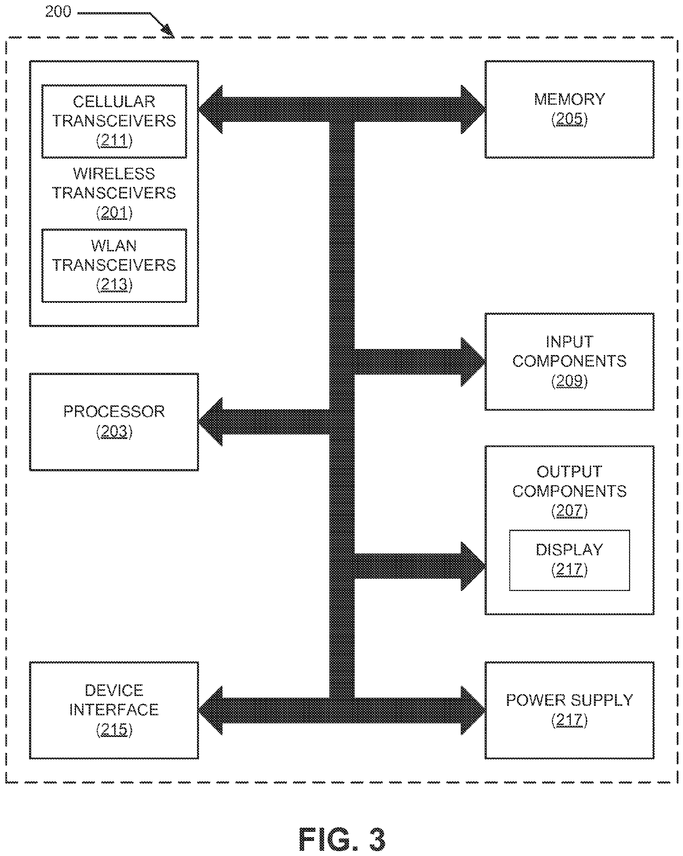

Further detailing components of an example mobile device 200, Figure 3 is a block diagram representing example components which may be used in association with an embodiment of the mobile device 200. The example components may include, but are not limited to including, one or more wireless transceivers 201, a processor 203, one or more memories 205, one or more output components 207, and one or more input components 209. Each transceiver 201 may be a receiver, a transmitter, or both.

The cellular transceivers 211 may utilize wireless technology for communication, such as, but not limited to, cellular-based communications such as analog communications, digital communications, or next generation communications, as represented by the cellular transceivers 211. The cellular transceivers 211 may be configured to establish the cellular connection 121 to the Internet 101 via the PDN 103.

Further, the WLAN transceivers 213 may also utilize wireless technology for communication, such as, but not limited to, peer-to-peer or ad hoc communications such as HomeRF, ANT, Bluetooth, IEEE 802.11 (a, b, g, or n) or other forms of wireless communication such as infrared technology. The WLAN transceivers 213 may be employed to establish the WLAN connection 123 or the trusted WLAN connection 155 via the WLAN networks 113 or the trusted WLAN networks 153, respectively.

The internal components of the mobile device 200 may further include a device interface 215 to provide a direct connection to auxiliary components or accessories for additional or enhanced functionality. In addition, the internal components preferably include a power source or supply 217, such as a portable battery, for providing power to the other internal components, allowing portability of the mobile device 200.

Further, the processor 203 may generate commands based on information received from one or more input components 209. The processor 203 may process the received information alone or in combination with other data, such as the information stored in the memory 205. Thusly, the memory 205 of the internal components 200 may be used by the processors 203 to store and retrieve data. Additionally, the components may include any additional processors aside from the application processor 203.

The data that may be stored by the memory 205 include, but are not limited to including, operating systems, applications, and data. Each operating system includes executable code that controls basic functions of the electronic device, such as interaction among the components of the internal components, communication with external devices via each transceiver 201 or the device interface 215, and storage and retrieval of applications and data to and from the memory 205. Each application may include executable code utilizing an operating system to provide more specific functionality for the electronic device 200. Data are non-executable code or information that may be referenced or manipulated by an operating system or application for performing functions of the electronic device 200.

The input components 209, such as a user interface, may produce an input signal in response to detecting a keystroke, a predetermined gesture at a touch input, a voice command, and the like The input components 209 may also include other sensors, such as a visible-light sensor, a motion sensor, and a proximity sensor.

Likewise, the output components 207 of the internal components may include one or more video, audio, or mechanical outputs. Specifically, the output components 207 include a display 217 in the form of a visual output component such as a cathode ray tube, liquid-crystal display, plasma display, incandescent light, fluorescent light, front or rear projection display, or a light-emitting diode indicator. Other examples of output components 207 may include an audio output component such as a speaker, alarm, or buzzer, or a mechanical output component such as vibrating or motion-based mechanisms.

It is to be understood that Figure 3 is provided for illustrative purposes only and for illustrating components of an electronic device 200 in accordance with the present invention and is not intended to be a complete schematic diagram of the various components required for a mobile device 200. Therefore, the mobile device 200 may include various other components not shown in Figure 2 or may include a combination of two or more components or a division of a particular component into two or more separate components and still be within the scope of the present invention.

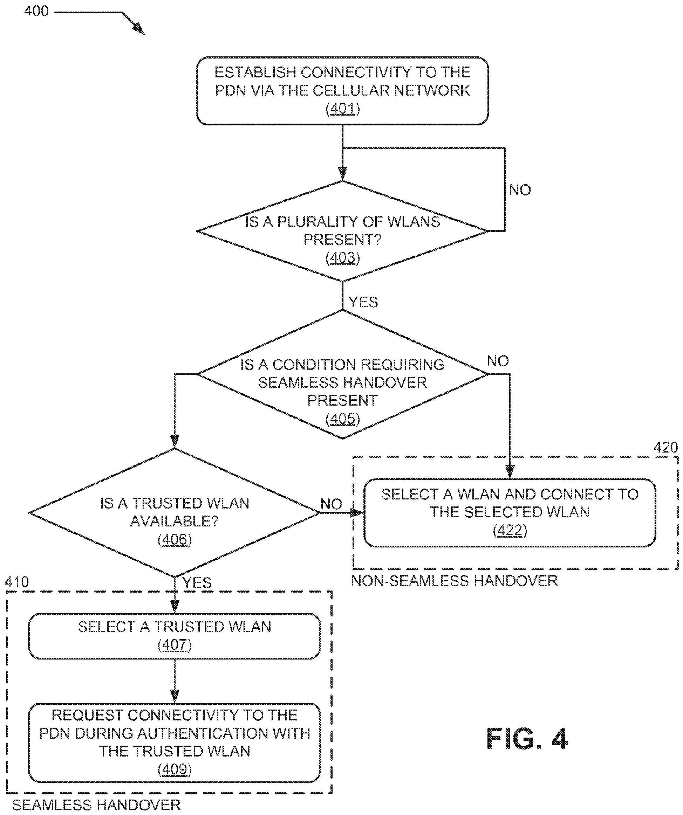

Turning now to Figure 4, a flowchart exemplifying a method for providing connectivity handover 152 for the mobile device 200 is shown. The connectivity handover 152 is a network handover from the cellular connection 121 to the trusted WLAN connection 155. At block 401, the mobile device 200 uses the cellular connection 121 to establish connectivity to the PDN 103. The mobile device 200 checks for the presence of one or more WLAN networks, including trusted WLAN networks (decision 403). If no WLAN network is present, then the mobile device 200 may continue checking for available WLAN networks. However, if a plurality of WLANs are detected, then the mobile device 200 determines if a condition requiring seamless handover is present (decision 405).

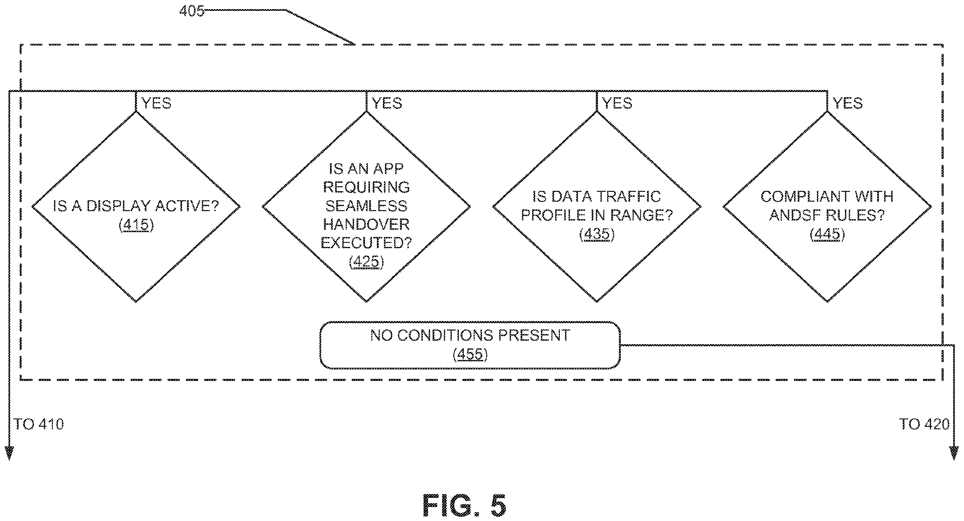

Seamless handover may be required during numerous operation states or scenarios and example scenarios requiring seamless handover are shown in Figure 5, as an example expansion of the decision process 405. The conditions requiring seamless handover, however, are not limited to the conditions of Figure 5 and additional conditions may be present to trigger seamless handover. Additionally, not all of the conditions listed must be present for the method 400 to perform seamless handover. However, if no recognized conditions requiring seamless handover are present (block 405), then the method 400 chooses non-seamless handover at block 420.

In some example embodiments, a condition requiring seamless handover may be the activation of the display 217 of the mobile device 200 (condition 415 of Figure 5). For example, the display 217 may be a screen of the mobile device 200, and whenever the screen is activated, the mobile device 200 determines that seamless handover is required. The method 400 may include this condition because when a screen is "ON," the user of the mobile device 200 may interact with network applications and may not tolerate communication delays or error messages that may occur during non-seamless handover.

Another example condition is the execution of an application that requires seamless handover (condition 425 of Figure 5). As mentioned above, applications requiring a constant stream of media may require seamless handover to prevent data interruption during use. Additionally, the mobile device 200 may maintain a list of applications which require seamless handover and employ seamless handover methods when an application on the list of applications is executed by the mobile device 200.

Further, the mobile device 200 may run a public API which allows application developers to program an application to inform the mobile device 200 that said application requires seamless handover during use. The mobile device 200, using the processor 203, may execute an API having a "seamless-handover lock" which locks the mobile device 200 into seamless handover during the use of applications which specify a need for seamless handover. Additionally, cellular network operator-branded walled-garden applications may employ such an API.

Data traffic analysis may also be used to determine if a condition exists wherein seamless handover is required (condition 435 of Figure 5). The mobile device 200 may analyze the data packet traffic flow transmitted to or from the mobile device 200. Traffic thresholds may be established for the mobile device 200 wherein if a data packet traffic flow associated with an IP address of the mobile device 200 exceeds the predetermined traffic flow threshold, then seamless handover is required.

For example, a VoIP application may have a specific traffic profile (e.g., 50-60 packets/second, 80-150 bytes/packet); in such examples, the predetermined traffic flow threshold may be based on the traffic profile of the VoIP application. Further, the mobile device 200 may configure one or more traffic thresholds based on one or more applications, including operator-branded walled-garden applications. When the traffic analysis indicates that there is at least one traffic flow that matches a pre-configured traffic profile, then the mobile device 200 determines that seamless handover is needed.

The mobile device 200 may further determine if seamless handover is required by using provisioned ANDSF rules (condition 445 of Figure 5). For example, if the mobile device 200 connects to a WLAN due to an ANDSF Inter-System Mobility Policy ("ISMP") rule, then the mobile device 200 assumes that seamless handover is required. If, for example, an operator-provided ISMP rule becomes active which indicates that access to evolved packet core ("EPC") is preferable over WLAN, then the mobile device 200 is triggered by this rule to select and connect to WLAN by seamless handover. Therefore, in this example, the ANDSF rule would provide a seamless handover to prevent interruptions in EPC connectivity.

Further, example ANDSF rules which may be employed by the mobile device 200 may include rules based on Inter-System Routing Policy ("ISRP") rules, ISRP for multi-access PDN connectivity rules, Non-Seamless WLAN Offload rules, Inter-APN Routing Policy rules, and the like, to determine if seamless mobility is required.

Returning now to Figure 4, if a condition requiring seamless handover is present, then the mobile device 200 determines if a trusted WLAN is available (decision 406). If a trusted WLAN is available, then the mobile device 200 selects seamless handover 410. If seamless handover 410 is selected, then the mobile device 200 selects a trusted WLAN from the detected WLANs (block 407) and requests connectivity to the PDN 103 during an authentication process with the trusted WLAN (block 409). Otherwise, if a condition requiring seamless handover is not present (decision 405) or a trusted WLAN is not available (decision 406), then the mobile device 200 selects non-seamless handover 420, wherein a WLAN, which may be any WLAN, trusted or not trusted, is chosen, and the mobile device 200 connects to the WLAN without WLAN connection to the PDN 103 (block 422).

In view of the many possible embodiments to which the principles of the present discussion may be applied, it should be recognized that the embodiments described herein with respect to the drawing figures are meant to be illustrative only and should not be taken as limiting the scope of the claims. Therefore, the techniques as described herein contemplate all such embodiments as may come within the scope of the following claims.

## Claims

1. A method (400) for providing connectivity handover for a mobile device (200) from cellular network (111) to a handover wireless local area network, WLAN, (113), wherein the cellular network (111) is a radio network associated with a serving gateway, S-GW, (105) of a packet data network, PDN, (103), which comprises the S-GW and a packet data network gateway, P-GW, (107), wherein the S-GW and the P-GW may be used by the PDN (103) to send or receive packet data, the method comprising:
establishing (401) connectivity to the PDN (103) via the cellular network;
determining (403) availability of one or more WLANs;
determining (405) that a condition requiring seamless handover is present, the condition requiring seamless handover being associated with the mobile device, wherein the condition requiring seamless handover is that if a data packet traffic flow associated with an IP address of the mobile device exceeds a predetermined traffic flow threshold, then seamless handover is required;
determining (406) that at least one of the one or more WLANs is a trusted WLAN (153), the trusted WLAN providing seamless handover to the PDN;
based on the determinations that the condition requiring seamless handover is present and that one or more of the WLANs is a trusted WLAN, selecting (407) one of the one or more trusted WLANs as the handover WLAN and requesting (409) connectivity to the PDN during an authentication with the handover WLAN (409); and connecting to the handover WLAN.

2. The method of claim 1 wherein the trusted WLAN supports an S2a interface.

3. The method of claim 1 wherein the condition requiring seamless handover is activation of a display associated with the mobile device.

4. The method of claim 1 wherein the condition requiring seamless handover is the mobile device executing an application that requires seamless handover.

5. The method of claim 4 wherein the application requiring seamless handover is an application requiring at least one of transmission or reception of streaming media.

6. The method of claim 1 wherein the mobile device implements a public application programming interface, API, the public API allowing an application to generate a condition requiring seamless handover.

7. The method of claim 1 further comprising determining if the condition requiring seamless handover is present by using one or more access network discovery and selection function, ANDSF, rules.

8. The method of claim 1 wherein one of the ANDSF rules is that if the mobile device selects WLAN for connection due to an ANDSF Inter-System Mobility Policy, ISMP, rule, then seamless handover is required.

9. The method of claim 1 wherein one of the ANDSF rules is that if the mobile device selects a WLAN for connection and remains simultaneously connected to the cellular network, then the mobile device applies ISMP rules and seamless handover is required.

10. The method of claim 1 further comprising determining if the condition requiring seamless handover is present by using one or more Non-Seamless WLAN Offload rules.

11. The method of claim 1 further comprising determining the condition requiring seamless handover is present by using one or more Inter-Access Point Name Routing Policy rules.

12. An apparatus for wireless communications by a mobile device (200), the apparatus comprising:
a cellular transceiver (211) for establishing connectivity to a packet data network, PDN, (103) via a cellular network (111) wherein the cellular network (111) is a radio network associated with a serving gateway, S-GW, (105) of the PDN, which comprises the S-GW and a packet data network gateway, P-GW, (107), wherein the S-GW and the P-GW may be used by the PDN (103) to send or receive packet data;
a processor (203)for determining that a condition requiring seamless handover is present, the condition requiring seamless handover being associated with the mobile device, wherein the condition requiring seamless handover is that if a data packet traffic flow associated with an IP address of the mobile device exceeds a predetermined traffic flow threshold, then seamless handover is required; and
a wireless local area networks, WLAN, transceiver (213) configured for:
determining availability of one or more WLANs (113);
determining that at least one of the one or more WLANs is a trusted WLAN (153), the trusted WLAN providing seamless handover to the PDN;
based on determinations that the condition requiring seamless handover is present and that one or more of the WLANs is a trusted WLAN, selecting one of the one or more trusted WLANs as the handover WLAN and requesting connectivity to the PDN during an authentication with the handover WLAN; and
connecting to the handover WLAN.

13. The apparatus of claim 12 wherein the trusted WLAN supports an S2a interface.

14. The apparatus of claim 12 further comprising a display, wherein the condition requiring seamless handover is activation of the display.

15. The apparatus of claim 12 further comprising a memory, wherein the condition requiring seamless mobility is the processor executing an application stored on the memory, the application requiring seamless handover.

## Patentansprüche

1. Verfahren (400) zum Bereitstellen eines Konnektivitätshandover für eine mobile Vorrichtung (200) von einem zellulären Netzwerk (111) zu einem drahtlosen Local Area Netzwerk, WLAN (113), im Handover, wobei das zelluläre Netzwerk (111) ein Funknetzwerk ist, das einem Dienstgateway, S-GW (105), eines Paketdatennetzwerks, PDN (103), zugeordnet ist, das den S-GW und ein Gateway des Paketdatennetzwerks, P-GW (107), umfasst, wobei das S-GW und das P-GW durch das PDN (103) verwendet werden können, um Paketdaten zu senden oder zu empfangen, wobei das Verfahren Folgendes umfasst:
Herstellen (401) einer Konnektivität zu dem PDN (103) über das zelluläre Netzwerk;
Bestimmen (403) einer Verfügbarkeit von einem oder mehr WLANs;
Bestimmen (405), dass eine Bedingung vorhanden ist, die einen nahtlosen Handover erfordert, wobei die Bedingung, die einen nahtlosen Handover erfordert, der mobilen Vorrichtung zugeordnet ist, wobei die Bedingung, die einen nahtlosen Handover erfordert, darin besteht, dass wenn ein Datenpakettrafficfluss, der einer IP-Adresse der mobilen Vorrichtung zugeordnet ist, eine vorbestimmte Trafficflussschwelle übersteigt, dann ein nahtloser Handover erforderlich ist;
Bestimmen (406), dass wenigstens eines von dem einen oder mehr WLANs ein gesichertes WLAN (153) ist, wobei das gesicherte WLAN einen nahtlosen Handover zu dem PDN bereitstellt;
basierend auf den Bestimmungen, dass die Bedingung, die einen nahtlosen Handover erfordert, vorhanden ist, und dass ein oder mehr von den WLANs ein gesichertes WLAN ist, Auswählen (407) von einem von dem ein oder mehr gesicherten WLANs als das Handover-WLAN und Anfordern (409) einer Konnektivität zu dem PDN während einer Authentifizierung mit dem Handover-WLAN (409); und
Verbinden mit dem Handover-WLAN.

2. Verfahren nach Anspruch 1, wobei das gesicherte WLAN ein S2a-Interface unterstützt.

3. Verfahren nach Anspruch 1, wobei die Bedingung, die einen nahtlosen Handover erfordert, eine Aktivierung eines Displays ist, das der mobilen Vorrichtung zugeordnet ist.

4. Verfahren nach Anspruch 1, wobei die Bedingung, die einen nahtlosen Handover erfordert, darin besteht, dass die mobile Vorrichtung eine Anwendung ausführt, die einen nahtlosen Handover erfordert.

5. Verfahren nach Anspruch 4, wobei die Anwendung, die einen nahtlosen Handover erfordert, eine Anwendung ist, die eine Übertragung und/oder einen Empfang von Streamingmedien erfordert.

6. Verfahren nach Anspruch 1, wobei die mobile Vorrichtung ein öffentliches Anwendungsprogrammierungsinterface, API, implementiert, wobei das öffentliche API es einer Anwendung ermöglicht, eine Bedingung zu generieren, die einen nahtlosen Handover erfordert.

7. Verfahren nach Anspruch 1, ferner umfassend eine Bestimmung, ob die Bedingung, die einen nahtlosen Handover erfordert, vorhanden ist, indem eine oder mehr Regeln einer Funktion zur Zugangsnetzwerkdiscovery- und Selektion, ANDSF, verwendet werden.

8. Verfahren nach Anspruch 1, wobei eine von den ANDSF-Regeln darin besteht, dass dann, wenn die mobile Vorrichtung aufgrund einer Regel einer ANDSF-Inter-System Mobility Policy, ISMP, WLAN zur Verbindung selektiert, dann ein nahtloser Handover erforderlich ist.

9. Verfahren nach Anspruch 1, wobei eine von den ANDSF-Regeln darin besteht, dass dann, wenn die mobile Vorrichtung ein WLAN zur Verbindung selektiert und gleichzeitig mit dem zellulären Netzwerk verbunden bleibt, dann die mobile Vorrichtung ISMP-Regeln anwendet und ein nathloser Handover erforderlich ist.

10. Verfahren nach Anspruch 1, ferner umfassend eine Bestimmung, ob die Bedingung, die einen nahtlosen Handover erfordert, vorhanden ist, indem eine oder mehr Regeln zum Non-Seamless WLAN-Offload verwendet werden.

11. Verfahren nach Anspruch 1, ferner umfassend eine Bestimmung, ob die Bedingung, die einen nahtlosen Handover erfordert, vorhanden ist, indem eine oder mehr Regeln für eine Inter-Access Point Name Routing Policy verwendet werden.

12. Gerät für drahtlose Kommunikationen durch eine mobile Vorrichtung (200), wobei das Gerät Folgendes umfasst:
einen zellulären Transceiver (211) zum Herstellen einer Konnektivität mit einem Paketdatennetzwerk, PDN (103), über ein zelluläres Netzwerk (111), wobei das zelluläre Netzwerk (111) ein Funknetzwerk ist, das einem Dienstgateway, S-GW (105), des PDN zugeordnet ist, das das S-GW und ein Gateway eines Paketdatennetzwerks, P-GW (107), umfasst, wobei das S-GW und das P-GW durch das PDN (103) zum Senden oder Empfangen von Paketdaten verwendet werden können;
einen Prozessor (203) zum Bestimmen, dass eine Bedingung, die einen nahtlosen Handover erfordert, vorhanden ist, wobei die Bedingung, die einen nathlosen Handover erfordert, darin besteht, dass dann, wenn ein Datenpaket Trafficfluss, der einer IP-Adresse der mobilen Vorrichtung zugeordnet ist, eine vorbestimmte Trafficflussschwelle übersteigt, dann ein nahtloser Handover erforderlich ist; und
einen Transceiver (213) eines drahtlosen Local Area Netzwerks, WLAN, der zu Folgendem konfiguriert ist:
Bestimmen einer Verfügbarkeit von einem oder mehr WLANs (113);
Bestimmen, dass wenigstens eines von den ein oder mehr WLANs ein gesichertes WLAN (153) ist, wobei das gesicherte WLAN einen nahtlosen Handover zu dem PDN bereitstellt;
basierend auf Bestimmungen, dass die Bedingung, die einen nahtlosen Handover erfordert, vorhanden ist, und dass eines oder mehr von den WLANs ein gesichertes WLAN ist, Selektieren von einem von den ein oder mehr gesicherten WLANs als das Handover-WLAN und Anfordern einer Konnektivität zu dem PDN während einer Authentifizierung mit dem Handover-WLAN;
Verbinden mit dem Handover-WLAN.

13. Gerät nach Anspruch 12, wobei das gesicherte WLAN ein S2a-Interface unterstützt.

14. Gerät nach Anspruch 12, ferner umfassend ein Display, wobei die Bedingung, die einen nahtlosen Handover erfordert, eine Aktivierung des Displays ist.

15. Gerät nach Anspruch 12, ferner umfassend einen Speicher, wobei die Bedingung, die nahtlose Mobilität erfordert, darin besteht, dass der Prozessor eine Anwendung ausführt, die in dem Speicher gespeichert ist, wobei die Anwendung einen nahtlosen Handover erfordert.

## Revendications

1. Procédé (400) pour la fourniture d'un transfert de connectivité pour un dispositif mobile (200) à partir d'un réseau cellulaire (111) vers un réseau local sans fil de transfert, WLAN, (113), dans lequel le réseau cellulaire (111) est un réseau radio associé à une passerelle de service, S-GW, (105), d'un réseau de données de paquets, PDN, (103), qui comprend le S-GW et une passerelle de réseau de données de paquets, P-GW, (107), dans lequel le S-GW et le P-GW peuvent être utilisés par le PDN (103) pour envoyer ou recevoir des données de paquets, le procédé comprenant :
la mise en place (401) d'une connectivité au PDN (103) via le réseau cellulaire ;
la détermination (403) de disponibilité d'un ou plusieurs WLAN ;
la détermination (405) qu'un état nécessitant un transfert homogène est présent, l'état nécessitant un transfert homogène étant associé au dispositif mobile, où l'état nécessitant un transfert homogène est que si un flux de trafic de paquets de données associé à une adresse IP du dispositif mobile dépasse un seuil de flux de trafic prédéterminé, alors un transfert homogène est requise ;
la détermination (406) qu'au moins un du ou des WLAN est un WLAN fiable (153), le WLAN fiable fournissant un transfert homogène au PDN ;
sur base des déterminations que l'état nécessitant un transfert homogène est présent et qu'un ou plusieurs des WLAN est un WLAN fiable, par la sélection (407) d'un du ou des réseaux WLAN fiable en tant que WLAN de transfert et par la demande (409) de la connectivité au PDN durant une authentification avec le WLAN de transfert (409) ; et
la connexion au WLAN de transfert.

2. Procédé selon la revendication 1, dans lequel le WLAN fiable prend en charge une interface S2a.

3. Procédé selon la revendication 1, dans lequel l'état nécessitant un transfert homogène est une activation d'un affichage associé au dispositif mobile.

4. Procédé selon la revendication 1, dans lequel la condition nécessitant un transfert homogène est le dispositif mobile d'exécution d'une application qui nécessite un transfert homogène.

5. Procédé selon la revendication 4, dans lequel l'application nécessitant un transfert homogène est une application nécessitant au moins une d'une transmission ou d'une réception de médias en continu.

6. Procédé selon la revendication 1, dans lequel le dispositif mobile met en oeuvre une interface de programmation d'application publique, API, l'API publique permettant à une application de générer un état nécessitant un transfert homogène.

7. Procédé selon la revendication 1, comprenant en outre la détermination de si la condition nécessitant un transfert homogène est présente à l'aide d'une ou plusieurs règles de fonctions de découverte et de sélection du réseau d'accès, ANDSF.

8. Procédé selon la revendication 1, dans lequel une des règles de l'ANDSF est que si le dispositif mobile sélectionne WLAN pour la connexion en raison d'une règle de Politique de Mobilité Inter-Systèmes ANDSF, ISMP, alors un transfert homogène est requis.

9. Procédé selon la revendication 1, dans lequel l'une des règles ANDSF est que si le dispositif mobile sélectionne un WLAN pour la connexion et reste simultanément connecté au réseau cellulaire, alors le dispositif mobile applique des règles ISMP et un transfert homogène est requis.

10. Procédé selon la revendication 1, comprenant en outre la détermination de si la condition nécessitant un transfert homogène est présente à l'aide d'une ou plusieurs règles de Déchargement WLAN Non Homogène.

11. Procédé selon la revendication 1, comprenant en outre la détermination de si la condition nécessitant un transfert homogène est présente à l'aide d'une ou plusieurs règles de Politique de Routage de Noms de Points d'Inter-Accès.

12. Appareil pour les communications sans fil par un dispositif mobile (200), l'appareil comprenant :
un émetteur-récepteur (211) pour l'établissement d'une connectivité à un réseau de données de paquets, PDN, (103), via un réseau cellulaire (111), dans lequel le réseau cellulaire (111) est un réseau radio associé à une passerelle de service, S-GW, (105) du PDN, qui comprend le S-GW et une passerelle de réseau de données de paquets, P-GW, (107), dans lequel le S-GW et le P-GW peuvent être utilisés par le PDN (103) pour envoyer ou recevoir des données de paquets ;
un processeur (203) pour la détermination qu'un état nécessitant un transfert homogène est présent, l'état nécessitant un transfert homogène étant associé au dispositif mobile, dans lequel l'état nécessitant un transfert homogène est que si un flux de trafic de paquets de données associé à une adresse IP du dispositif mobile dépasse un seuil de flux de trafic prédéterminé, alors un transfert homogène est requis ; et
un émetteur-récepteur de réseau local sans fil, WLAN, (213), configuré pour :
la détermination de disponibilité d'un ou plusieurs WLAN (113) ;
la détermination qu'au moins un du ou des WLAN est un WLAN fiable (153), le WLAN fiable fournissant un transfert homogène au PDN ;
sur base des déterminations que la condition nécessitant un transfert homogène est présente et qu'un ou plusieurs des WLAN est un WLAN fiable, par la sélection un du ou des réseaux WLAN fiable en tant que WLAN de transfert et par la demande de la connectivité au PDN durant une authentification avec le WLAN de transfert ; et
la connexion au WLAN de transfert.

13. Appareil selon la revendication 12, dans lequel le WLAN fiable prend en charge une interface S2a.

14. Appareil selon la revendication 12 comprenant en outre un affichage, dans lequel l'état nécessitant un transfert homogène est une activation de l'affichage.

15. Appareil selon la revendication 12 comprenant en outre une mémoire, dans lequel la condition nécessitant une mobilité homogène est le processeur exécutant une application stockée sur la mémoire, l'application nécessitant un transfert homogène.
